# EUROPEAN PATENT APPLICATION

(11) **EP 2 448 306 A1**
(43) Date of publication of application: **02.05.2012**
(21) Application number: 10791799.9
(22) Date of filing: 10.06.2010
(51) Int. Cl.: H04W 12/08, H04W 4/24, H04W 8/20

(54) **ROAMING SYSTEM, HLR, AND PACKET COMMUNICATION RESTRICTING METHOD**

(30) Priority: 24.06.2009 JP 2009149655
(71) Applicant: NTT DOCOMO, INC., Chiyoda-ku Tokyo 100-6150 (JP)
(72) Inventor: OTSUKA, Keiichiro, Tokyo 100-6150 (JP); YAMAURA, Mototsugu, Tokyo 100-6150 (JP); MATSUKAWA, Tatsuo, Tokyo 100-6150 (JP); HASEGAWA, Toru, Tokyo 100-6150 (JP); KOBAYASHI, Hironari, Tokyo 100-6150 (JP); IWASAKI, Atsushi, Tokyo 100-6150 (JP)
(74) Representative: Sparing Röhl Henseler
(86) International application number: PCT/JP2010/003864
(87) International publication number: WO 2010/150473

(57) **Abstract**

A communication restriction is performed in an appropriate manner for a mobile station (subscriber) that has roamed out of a communication operator's network where subscriber information is registered into another one. In a roaming system including an HLR 110 and a GGSN 120 of a first communication operator's communication network 100 and an SGSN 220 of a second communication operator's communication network 200, the SGSN 220 receives a packet transmission request from a mobile station 210 and transfers it to the GGSN 120. The GGSN 120 that has received the transferred packet transmission request makes an inquiry about subscriber information of the mobile station 210 to the HLR 110. The HLR 110 identifies whether or not the packet transmission request is to be subject to a restriction, and returns an identification result to the GGSN 120 when it is to be subject to the restriction. The GGSN 120 transfers a response to the identification result to the SGSN 220. The SGSN that has received the transfer transfers the response to the identification result to the mobile station 210.

## Description

### Technical Field

The present invention relates to a roaming system, a Home Location Register (HLR), and a packet communication restricting method, and in particular, to a roaming system, a HLR, and a packet communication restricting method, which enable a restriction on a mobile station that has roamed out of one communication operator's network into another one by determining whether or not there is a restriction condition where, for example, a packet fee exceeds a restriction value in an appropriate manner.

### Background Art

A roaming system is proposed such that when a location registration request is made from a mobile communication network of a roaming destination, permission or denial of the location registration is individually controlled according to a content of an additional service registered beforehand (for example, see Patent Document 1).
Patent Document 1 discloses that when the HLR, which has received the location registration request from a mobile switching center of the mobile communication network of the roaming destination, receives an additional service providing function unsupported from the mobile switching center as a response to the transfer of the subscriber information to the mobile switching center, the HLR determines the permission of denial of the location registration of the mobile station based upon at least one of the content of the additional service managed by a service control unit and activation information of the additional service. Then, the location registration control is carried out based upon the determination result.

### Prior Art Documents

### Patent Documents

Patent Document 1: JP 2003 - 125434 A

### Summary of the Invention

### Problem to be Solved

It is to be noted, however, that also as to the packet communication by use of the mobile station that has roamed out of one communication operator's network where subscriber information is registered into another one, there is a need for restricting the communication of the packet transmission request to be subject to a restriction on communication, in a case where, for example, the packet communication fee set in accordance with a contract is exceeded in an appropriate manner.
In the current roaming system, a method is employed such that a home network Home Location Register (HLR) transmits a delete request (or restriction information) of profile information to a roaming Serving GPRS Support Node (SGSN) when the used packet amount is exceeded. The SGSN of the roaming destination restricts the packet transmission request from the mobile station by deleting the profile information. In this roaming system, however, the communication cannot be necessarily restricted in an appropriate manner all the time.

Even the above-described Patent Document 1 does not have a perspective of restricting the communication as described above in an appropriate manner, and therefore does not disclose any measures of dealing with such a problem.
The present invention has been made in view of the above circumstances, and has an object to provide a roaming system, the HLR, and a packet communication restricting method that enable a restriction on the communication of a mobile station (subscriber) that has roamed out of a communication operator's network where the subscriber information is registered into another one, in an appropriate manner all the time.

### Solution to the Problem

(1) There is provided a roaming system comprising: a Home Location Register (HLR) installed in a first communication operator's communication network and having subscriber information including location registration information of a mobile station; a Gateway GPRS Support Node (GGSN) that is a gateway for interconnecting with an external packet communication network; and a Serving GPRS Support Node (SGSN), installed in a second communication operator's communication network, for relaying communication with the mobile station,
the SGSN comprising: a packet transmission request transferring unit for transferring a packet transmission request to the GGSN, upon receipt of the packet transmission request from a mobile station located in the second communication operator's communication network; and an identification result response transferring unit for receiving an identification result from the GGSN, made by the HLR, of whether or not the packet transmission request is to be subject to a prescribed restriction, and transferring a response to the identification result to the mobile station,
the GGSN comprising: a subscriber information inquiry unit for making an inquiry about subscriber information of the mobile station to the HLR, upon receipt of the packet transmission request transferred from the SGSN; and an identification result response transferring unit for transferring a response to the identification result received from the HLR to the SGSN,
the HLR comprising: a restricted state identifying unit for identifying whether or not the packet transmission request is to be subject to a restriction set in accordance with the subscriber information; and an identification result responding unit for making a response corresponding to the identification result to the GGSN, when the restricted state identifying unit identifies that the packet transmission request is to be subject to the restriction.

The above roaming system of (1) includes a Home Location Register (HLR) installed in a first communication operator's communication network and having subscriber information including location registration information of a mobile station, a Gateway GPRS Support Node (GGSN) that is a gateway for interconnecting with an external packet communication network, and a Serving GPRS Support Node (SGSN), installed in a second communication operator's communication network, for relaying communication with the mobile station.
Then, the SGSN transfers a packet transmission request to the GGSN from a packet transmission request transferring unit thereof, upon receipt of the packet transmission request from a mobile station located in the second communication operator's communication network.

In addition, the SGSN makes an inquiry about subscriber information of the mobile station to the HLR, from a subscriber information inquiry unit thereof, upon receipt of the packet transmission request transferred from the SGSN.
Furthermore, the HLR identifies whether or not the packet transmission request is to be subject to a restriction set in accordance with the subscriber information, by use of a restricted state identifying unit thereof, and makes a response corresponding to the identification result to the GGSN, from an identification result responding unit thereof, when the packet transmission request is to be subject to the restriction.
Moreover, the GGSN transfers a response to the identification result received from the HLR to the SGSN, from and an identification result response transferring unit thereof.
Further, the SGSN transfers a response to the identification result received from the GGSN to the mobile station, from an identification result response transferring unit thereof.

(2) In the roaming system of (1), the restricted state identifying unit of the HLR may perform the identification based upon the restriction information on the communication of each of customers held by a customer management system for managing customer information installed in the first communication operator's communication network.
In the above roaming system of (2), according to the roaming system of (1), the HLR may perform the identification by use of the restricted state identifying unit thereof, based upon the restriction information on the communication of each of customers held by a customer management system for managing customer information installed in the first communication operator's communication network.

(3) In the roaming system of (2), the customer management system may acquire and hold restriction information for identifying a customer whose used packet fee exceeds a restriction value based upon detailed billing data held by a detailed billing database of a detailed billing center, installed in the communication operator's communication network, for providing a centralized management of customers' billing data.
In the above roaming system of (3), according to the roaming system of (2), the customer management system may acquire and hold restriction information for identifying a customer whose used packet fee exceeds a restriction value based upon detailed billing data held by a detailed billing database of a detailed billing center, installed in the communication operator's communication network, for providing a centralized management of customers' billing data.

(4) In the roaming system of (1), the restricted state identifying unit of the HLR may perform the identification based upon the restriction information on the communication of each of customers held by a customer management system for managing customer information installed in the first communication operator's communication network.
In the above roaming system of (4), according to the roaming system of (1), the restricted state identifying unit of the HLR may perform the identification based upon the restriction information on the communication of each of customers held by a customer management system for managing customer information installed in the first communication operator's communication network.

(5) In the roaming system of (4), the identification result response transferring unit of the GGSN returns a response to the identification result including "user authentication failed" in accordance with the technical standard of the Third Generation Partnership Project (3GPP), upon receipt, from the HLR, of a response to the identification result including message data of "unknown subscriber" in accordance with the technical standard of the 3GPP.
In the above roaming system of (5), according to the roaming system of (4), the GGSN may return from the identification result response transferring unit a response to the identification result including "user authentication failed" in accordance with the technical standard of the Third Generation Partnership Project (3GPP), upon receipt, from the HLR, of a response to the identification result including message data of "unknown subscriber" in accordance with the technical standard of the 3GPP.

(6) There is provided a Home Location Register (HLR) adaptable to a roaming system, the roaming system comprising: the HLR installed in a first communication operator's communication network and having subscriber information including location registration information of a mobile station; a Gateway GPRS Support Node (GGSN) that is a gateway for interconnecting with an external packet communication network; and a Serving GPRS Support Node (SGSN), installed in a second communication operator's communication network, for relaying communication with the mobile station,
the HLR comprising:
a subscriber information inquiry receiving unit for receiving a subscriber information inquiry from the GGSN, of the first communication operator's communication network, that has received a packet transmission request via the SGSN from a mobile station located in the second communication operator's communication network;
a restricted state identifying unit for identifying whether or not the packet transmission request is to be subj ect to a restriction set in accordance with the subscriber information; and
an identification result responding unit for making a response corresponding to the identification result to the GGSN, when the restricted state identifying unit identifies that the packet transmission request is to be subject to the restriction.

The above HLR of (6) is adaptable to a roaming system, the roaming system comprising: the HLR installed in a first communication operator's communication network and having subscriber information including location registration information of a mobile station; a Gateway GPRS Support Node (GGSN) that is a gateway for interconnecting with an external packet communication network; and a Serving GPRS Support Node (SGSN), installed in a second communication operator's communication network, for relaying communication with the mobile station,
A subscriber information inquiry receiving unit thereof receives a subscriber information inquiry from the GGSN, of the first communication operator's communication network, that has received a packet transmission request via the SGSN from a mobile station located in the second communication operator's communication network.

A restricted state identifying unit identifies whether or not the packet transmission request is to be subject to a restriction set in accordance with the subscriber information.
An identification result responding unit makes a response corresponding to the identification result to the GGSN, when the restricted state identifying unit identifies that the packet transmission request is to be subject to the restriction.

(7) In the above roaming system of (6), the restricted state identifying unit may perform the identification based upon the restriction information on the communication of each of customers held by a customer management system for managing customer information installed in the first communication operator's communication network.
In the above HLR of (7), according to the roaming system of (6), in particular, the restricted state identifying unit may perform the identification based upon the restriction information on the communication of each of customers held by a customer management system for managing customer information installed in the first communication operator's communication network.

(8) In the roaming system of (7), the customer management system may acquire and hold restriction information for identifying a customer whose used packet fee exceeds a restriction value based upon detailed billing data held by a detailed billing database of a detailed billing center, installed in the communication operator's communication network, for providing a centralized management of customers' billing data.
In the above HLR of (8), according to the roaming system of (7), in particular, the customer management system may acquire and hold restriction information for identifying a customer whose used packet fee exceeds a restriction value based upon detailed billing data held by a detailed billing database of a detailed billing center, installed in the communication operator's communication network, for providing a centralized management of customers' billing data.

(9) There is provided a packet communication restricting method in a Home Location Register (HLR) in a roaming system comprising: the HLR installed in a first communication operator's communication network and having subscriber information including location registration information of a mobile station; a Gateway GPRS Support Node (GGSN) that is a gateway for interconnecting with an exterior packet communication network; and a Serving GPRS Support Node (SGSN), installed in a second communication operator's communication network, for relaying communication with the mobile station,
the packet communication restricting method comprising: receiving a subscriber information inquiry from the GGSN, in the first communication operator's communication network, that has received a packet transmission request via the SGSN from a mobile station located in the second communication operator's communication network;
identifying whether or not the packet transmission request is to be subject to a restriction set in accordance with the subscriber information; and
making a response corresponding to the identification result to the GGSN, when the restricted state identifying unit identifies that the packet transmission request is to be subject to the restriction.

In the above packet communication restricting method of (9), according to the packet communication restricting method of (8), a packet communication restricting method is performed in a Home Location Register (HLR) in a roaming system comprising: the HLR installed in a first communication operator's communication network and having subscriber information including location registration information of mobile station; a Gateway GPRS Support Node (GGSN) that is a gateway for interconnecting with an exterior packet communication network; and a Serving GPRS Support Node (SGSN), installed in a second communication operator's communication network, for relaying communication with the mobile station.

In a receiving step, a subscriber information inquiry is received from the GGSN, in the first communication operator's communication network, that has received a packet transmission request via the SGSN from a mobile station located in the second communication operator's communication network;
Additionally, in an identifying step, whether or not the packet transmission request is to be subject to a restriction set in accordance with the subscriber information is identified.
Further, in a response step, a response is made corresponding to the identification result to the GGSN, when the restricted state identifying unit identifies that the packet transmission request is to be subject to the restriction.

### Advantageous Effects of the Invention

Including a case of a mobile station that has roamed out into a foreign country, it is thus possible to realize a roaming system, the HLR, and a packet communication restricting method that enable a restriction on the communication of a mobile station (subscriber) that has roamed out of a communication operator's network where the subscriber information is registered into another one, in an appropriate manner all the time.

### Brief Description of the Drawings

FIG. 1 is a conceptual diagram illustrative of a configuration of a roaming system as an embodiment of the present invention;
FIG. 2 is a sequence chart illustrative of an operation of the roaming system of FIG. 1;
FIG. 3 is a functional block diagram illustrative of the HLR as an embodiment of the present invention; and
FIG. 4 is a flowchart illustrative of a packet communication restricting method as an embodiment of the present invention.

### Description of Embodiments

Hereinafter, embodiments of the present invention will be described in detail with reference to the drawings.

### (Configuration of Roaming System)

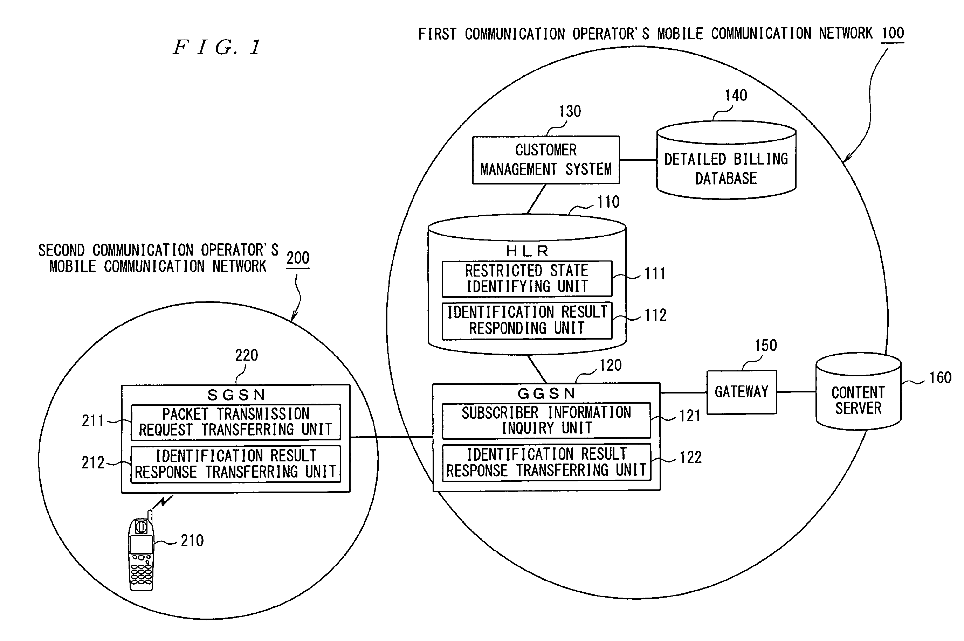

FIG. 1 is a conceptual diagram illustrative of a roaming system as an embodiment of the present invention.
In FIG. 1, a first communication operator's communication network 100 includes: a Home Location Register (HLR) 110 having subscriber information including location registration information of mobile stations; and a Gateway GPRS Support Node (GGSN) 120 that is a gateway for interconnecting with external packet communication networks.
In addition, a mobile station 210 that is registered as a subscriber in the first communication operator's communication network 100 is located in a second communication operator's communication network 200, under the control of a Serving GPRS Support Node (SGSN) 220.

The SGSN 220 in the second communication operator's communication network 200 is provided with a packet transmission request transferring unit 211 for transferring a packet transmission request to the GGSN 120, upon receipt of the packet transmission request from a mobile station 210 located in the second communication operator's communication network 200. The SGSN 220 is also provided with an identification result response transferring unit 212 for receiving from the GGSN 120 an identification result produced by the HLR 110 as to whether or not the packet transmission request is to be subject to a prescribed restriction and then transferring a response to the identification result to the identification result to the mobile station 210.

The GGSN 120 is provided with a subscriber information inquiry unit 121 for making an inquiry about the subscriber information on the mobile station 210 to the HLR 110, upon receipt of the packet transmission request transferred from the SGSN 220. The GGSN 120 is also provided with an identification result response transferring unit for transferring to the SGSN 220 a response to the identification result received from the HLR 110.
The HLR 110 is provided with a restricted state identifying unit 111 for identifying whether or not the packet transfer request is to be subject to the restriction set in accordance with the subscriber information. The HLR 110 is also provided with an identification result responding unit 112 for making a response to the identification result to the GGSN 120 when the restricted state identifying unit 111 identifies that the packet transfer request is to be restricted.

That is, the restricted state identifying unit 111 of the HLR 110 identifies whether or not the packet transmission request is to be subject to the restriction set in accordance with the subscriber information. When the packet transmission request is to be subject to the restriction, the HLR 110 makes a response to the GGSN 120 corresponding to the identification result including message data of "unknown subscriber" in accordance with the technical standard (3GPP TS 29. 002) of the Third Generation Partnership Project (3GPP), for example.

The GGSN 120 that has received the response to the identification result from the HLR 110 transfers the response from an identification result response transferring unit 122 thereof to the SGSN 220 as a response corresponding to the identification result including the message data of "user authentication failed" in accordance with the technical standard (3GPP TS 29.060) of the 3GPP, for example.
The SGSN 220 that has received the response to the identification result from the GGSN 120 transfers this response to the mobile station 210 from the identification result response transferring unit 212.
The mobile station 210 that has received the response to the identification result from the SGSN 220 displays a prescribed error indication on a display of its own such as "subscriber authentication failed" as an error indication corresponding to the response.

In the embodiment of FIG. 1, the HLR 110 carries out the identification based upon restriction information on communication for each customer held by a customer management system 130, for managing the customer information, installed in the first communication operator's communication network 100.
The customer management system 130 is installed in the first communication operator's communication network 100, and after acquiring from a detailed billing center, holds the restriction information for identifying a customer whose used packet fee exceeds a restriction value based upon detailed billing data held by a detailed billing database 140 of the detailed billing center for providing a centralized management of customers' billing data. The HLR 110 identifies whether or not the packet transmission request is to be subject to the above-described restriction depending on the restriction information that is held.

The GGSN 120 according to the present embodiment is coupled to a content server 160 via a gateway 150 to provide the customers with services so that they can access the contents stored in the content server 160 via the GGSN 120.
In the above configuration, specifically, even in a case where the first communication operator's communication network 100 is constructed in a first country and the second communication operator's communication network 200 is constructed in a second country and an international roaming system for mutually coupling the networks is established, the configuration and function of the above-described roaming system can be realized in the same manner.

### (Communication Control Operation in Roaming System)

Next, referring to the drawings, a description will be given of the communication restricting operation in the roaming system of FIG. 1.

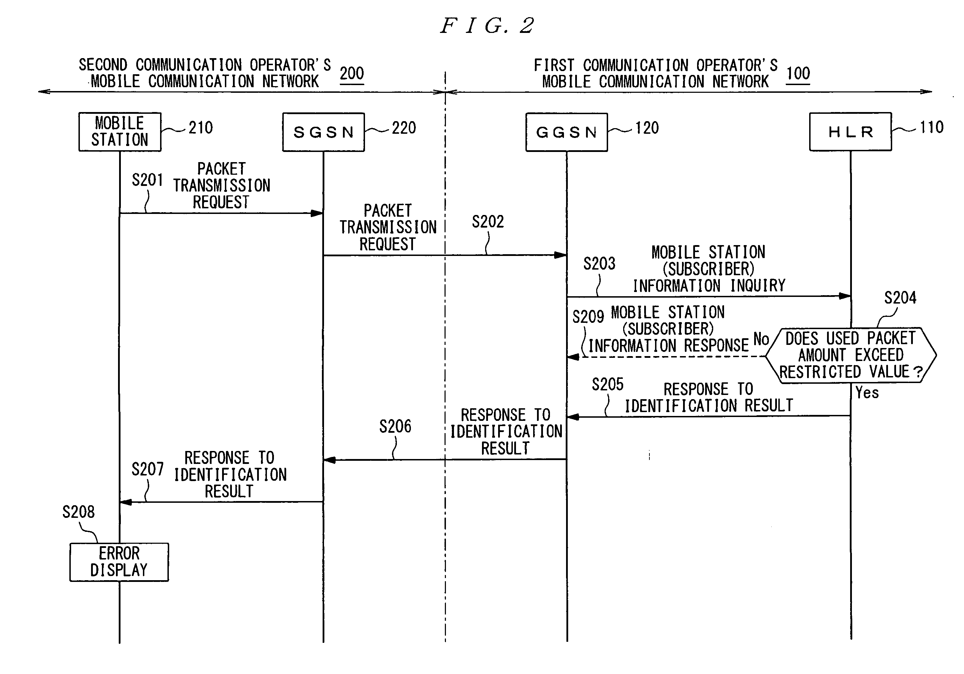

FIG. 2 is a sequence chart illustrative of the operation of the roaming system of FIG. 1.
It is assumed that the mobile station 210 is registered in the first communication operator's communication network 100 as a subscriber and roams out into the second communication operator's communication network 200, and makes a packet transmission request to the SGSN 220 installed in the second communication operator's communication network 200 (step S201).
The SGSN 220 transfers the packet transmission request received at step S201 to the GGSN 120 of the first communication operator's communication network 100 (step S202).
The GGSN 120 that received the packet transmission request at step S202 makes an inquiry about the mobile station (subscriber) information to the HLR 110, based upon the packet transmission request (step S203).

The HLR 110 that received at step S203 the inquiry about the mobile station (subscriber) information identifies whether or not the used packet amount relating to the mobile station (subscriber) will exceed a prescribed value according to the contract with the first communication operator (step S204).
In the identifying process at step S201, when the identification result is obtained such that the used packet amount will exceed the above-described prescribed value if receiving the packet transmission request (step S204: Yes), the HLR 110 makes a response to the identification result including the message data of "unknown subscriber" in accordance with the technical standard of 3GPP, to the GGSN 120, for example (step S205).

The GGSN 120 that received the response at step S205 transfers the response to the identification result to the SGSN 220 of the second communication operator' s communication network 200, as a response including the message data of "user authentication failed" in accordance with the technical standard of the 3GPP, for example (step S206).
The SGSN 220 that received the response to the identification result at step S206 transfers the response to the identification result to the mobile station 210 (step S207).

The mobile station 210 that received the response at step S207 displays a prescribed error indication on a display of its own such as "subscriber authentication failed" or the like, as an error indication corresponding to the response to the identification result (step S208).
In the identifying process at step S204, when the HLR 110 acquires the identification result that the used packet amount will not exceed the above-described prescribed value after accepting the packet transmission request (step S204: No), the HLR 110 normally makes a response of the mobile station (subscriber) information to the GGSN 120.
In this manner, the mobile station 210 is allowed to normally communicate (communication including the service with the use of the content server 160 of FIG. 1) after roaming.

Specifically, as described above with reference to FIG. 1, even in a case where the first communication operator's communication network 100 is constructed in the first country and the second communication operator's communication network 200 is installed in the second country and an international roaming system for mutually coupling the networks is established, the configuration and function of the above-described roaming system can be realized in the same manner. Accordingly, such an international roaming system also operates as described above with reference to the sequence chart of FIG. 2.

### (Configuration of HLR)

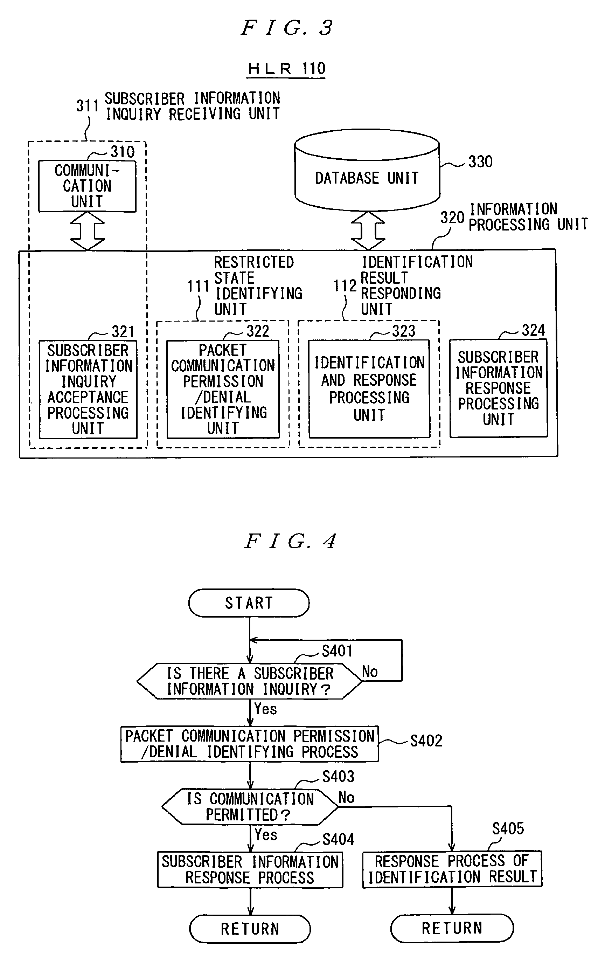

FIG. 3 is a functional block diagram illustrative of the HLR as an embodiment of the present invention.
In FIG. 3, the HLR 110 as an embodiment of the present invention includes: a communication unit 310; an information processing unit 320; and a database unit 330.
The subscriber information including the location registration information of mobile stations is stored in the database unit 330.
The communication unit 310 communicates with the exterior for data (information) transmission/reception. In addition, the information processing unit 320 includes: a subscriber information inquiry acceptance processing unit 321; a restricted state identifying unit 322; an identification and response processing unit 323; and a subscriber information response processing unit 324.

The subscriber information inquiry acceptance processing unit 321 is configured to accept a subscriber information inquiry to be received through the communication unit 310, and the subscriber information inquiry acceptance processing unit 321 and the communication unit 310 correspond to a subscriber information inquiry receiving unit 311 in the HLR 110.
When the subscriber information inquiry acceptance processing unit 321 receives the subscriber information inquiry, the restricted state identifying unit 322 corresponds to the restricted state identifying unit 111 for identifying whether or not the packet transmission request is to be subject to the restriction set in accordance with the subscriber information.

When the restricted state identifying unit 322 determines that the packet transmission request is to be subject to the restriction, the identification and response processing unit 323 corresponds to the identification result responding unit 112 for making a response to the identification result through the communication unit 310 to the GGSN 120.
The subscriber information response processing unit 324 returns the mobile station (subscriber) information through the communication unit 310 to the GGSN 120, when the restricted state identifying unit 322 determines that the packet transmission request is not to be subject to the restriction.

### (Processing Flow of Communication Information in HLR)

A packet communication restricting process in the HLR 110 in the above configuration will be described with reference to a flowchart illustrative of a packet communication restricting method according to an embodiment of the present invention.
FIG. 4 is a flowchart illustrative of the packet communication restricting method according to an embodiment of the present invention.
The subscriber information inquiry from the GGSN 120 is being waited for, the GGSN 120 having received the packet transmission request issued from the GGSN 120 (the first communication operator's communication network 100) via the SGSN 220 (the second communication operator's communication network 200) where the GGSN 120 is located (step S401: No).

Upon receipt of the subscriber information inquiry (step S401: Yes), a packet communication permission/denial identifying process is executed for identifying whether or not the packet transmission request is to be subject to the restriction set in accordance with the subscriber information (step S402).
The result of the packet communication permission/denial identifying process at step S402 is determined whether or not it is to be subject to the above-described restriction and thereby to be permitted (step S402).

When it is determined at step S402 that the packet communication in accordance with the packet transmission request is not to be subject to the above-described restriction and thereby to be permitted (step S402: Yes), a mobile station (subscriber) information response is given normally (step S404). In this manner, the mobile station 210 is normally enabled to communicate (communication including the service with the use of the content server 160 of FIG. 1) after roaming.

On the other hand, at step S402, the packet communication in accordance with the packet transmission request is determined to be subject to the above-described restriction and thereby to deny the communication (step S402: No), a response is given to the GGSN 120 corresponding to the identification result including message data of "unknown subscriber" in accordance with the technical standard (3GPP TS 29.002) of the Third Generation Partnership Project (3GPP), for example. As described above, the packet communication of the mobile station 210 is restricted with certainty based upon the message data of "unknown subscriber".

### Reference Signs List

- 100: first communication operator's communication network
- 110: HLR
- 120: GGSN
- 130: customer management system
- 140: detailed billing database
- 150: gateway
- 160: content server
- 200: second communication operator's communication network
- 210: mobile station
- 220: SGSN
- 310: communication unit
- 320: information processing unit
- 321: subscriber information inquiry acceptance processing unit
- 322: restricted state identifying unit
- 323: identification and response processing unit
- 324: subscriber information response processing unit
- 330: database unit

## Claims

1. A roaming system comprising:
a Home Location Register (HLR) installed in a first communication operator's communication network and having subscriber information including location registration information of a mobile station;
a Gateway GPRS Support Node (GGSN) that is a gateway for interconnecting with an external packet communication network; and
a Serving GPRS Support Node (SGSN), installed in a second communication operator's communication network, for relaying communication with the mobile station,
the SGSN comprising:
a packet transmission request transferring unit for transferring a packet transmission request to the GGSN, upon receipt of the packet transmission request from a mobile station located in the second communication operator's communication network; and
an identification result response transferring unit for receiving an identification result from the GGSN, made by the HLR, of whether or not the packet transmission request is to be subject to a prescribed restriction, and transferring a response to the identification result to the mobile station,
the GGSN comprising:
a subscriber information inquiry unit for making an inquiry about subscriber information of the mobile station to the HLR, upon receipt of the packet transmission request transferred from the SGSN; and
an identification result response transferring unit for transferring a response corresponding to the identification result received from the HLR to the SGSN,
the HLR comprising:
a restricted state identifying unit for identifying whether or not the packet transmission request is to be subject to a restriction set in accordance with the subscriber information; and
an identification result responding unit for making a response corresponding to the identification result to the GGSN, when the restricted state identifying unit identifies that the packet transmission request is to be subject to the restriction.

2. The roaming system according to claim 1, wherein the restricted state identifying unit of the HLR performs the identification based upon the restriction information on the communication of each of customers held by a customer management system for managing customer information installed in the first communication operator's communication network.

3. The roaming system according to claim 2, wherein the customer management system acquires and holds restriction information for identifying a customer whose used packet fee exceeds a restriction value based upon detailed billing data held by a detailed billing database of a detailed billing center, installed in the communication operator's communication network, for providing a centralized management of customers' billing data.

4. The roaming system according to claim 1, wherein the restricted state identifying unit of the HLR performs the identification based upon the restriction information on the communication of each of customers held by a customer management system for managing customer information installed in the first communication operator's communication network. -

5. The roaming system according to claim 1, wherein the identification result response transferring unit of the GGSN returns a response to the identification result including "user authentication failed" in accordance with the technical standard of the Third Generation Partnership Project (3GPP) to the SGSN, upon receipt, from the HLR, of a response to the identification result including message data of "unknown subscriber" in accordance with the technical standard of the 3GPP.

6. A Home Location Register (HLR) adaptable to a roaming system, the roaming system comprising:
the HLR installed in a first communication operator's communication network and having subscriber information including location registration information of a mobile station;
a Gateway GPRS Support Node (GGSN) that is a gateway for interconnecting with an external packet communication network; and
a Serving GPRS Support Node (SGSN), installed in a second communication operator's communication network, for relaying communication with the mobile station,
the HLR comprising:
a subscriber information inquiry receiving unit for receiving a subscriber information inquiry from the GGSN, of the first communication operator's communication network, that has received a packet transmission request via the SGSN from a mobile station located in the second communication operator's communication network;
a restricted state identifying unit for identifying whether or not the packet transmission request is to be subject to a restriction set in accordance with the subscriber information; and
an identification result responding unit for making a response corresponding to the identification result to the GGSN, when the restricted state identifying unit identifies that the packet transmission request is to be subject to the restriction.

7. The roaming system according to claim 6, wherein the restricted state identifying unit performs the identification based upon the restriction information on the communication of each of customers held by a customer management system for managing customer information installed in the first communication operator's communication network.

8. The roaming system according to claim 7, wherein the customer management system acquires and holds restriction information for identifying a customer whose used packet fee exceeds a restriction value based upon detailed billing data held by a detailed billing database of a detailed billing center, installed in the communication operator's communication network, for providing a centralized management of customers' billing data.

9. A packet communication restricting method in a Home Location Register (HLR) in a roaming system comprising:
the HLR installed in a first communication operator's communication network and having subscriber information including location registration information of a mobile station;
a Gateway GPRS Support Node (GGSN) that is a gateway for interconnecting with an exterior packet communication network; and
a Serving GPRS Support Node (SGSN), installed in a second communication operator's communication network, for relaying communication with the mobile station,
the packet communication restricting method comprising:
receiving a subscriber information inquiry from the GGSN, in the first communication operator's communication network, that has received a packet transmission request via the SGSN from a mobile station located in the second communication operator's communication network;
identifying whether or not the packet transmission request is to be subject to a restriction set in accordance with the subscriber information; and
making a response corresponding to the identification result to the GGSN, when the restricted state identifying unit identifies that the packet transmission request is to be subject to the restriction.
